# EUROPEAN PATENT APPLICATION

(11) **EP 4 194 349 A1**
(43) Date of publication of application: **14.06.2023**
(21) Application number: 21854066.4
(22) Date of filing: 05.08.2021
(51) Int. Cl.: B65B 57/00, G05B 23/02

(54) **DISPLAY SYSTEM, DISPLAY METHOD, AND DISPLAY PROGRAM**

(30) Priority: 06.08.2020 JP 2020133641
(71) Applicant: OMRON Corporation, Kyoto 600-8530 (JP)
(72) Inventor: SHIBAGAKI, Saeko, Kyoto-shi Kyoto 600-8530 (JP); HATTORI, Reiko, Kyoto-shi Kyoto 600-8530 (JP); MINEMOTO, Toshifumi, Kyoto-shi Kyoto 600-8530 (JP)
(74) Representative: Horn Kleimann Waitzhofer Patentanwälte PartG mbB
(86) International application number: PCT/JP2021/029042
(87) International publication number: WO 2022/030568

(57) **Abstract**

A display system according to the present invention is a display system to be provided in a production facility that produces products and includes, as components, at least one driving means for driving the production facility and at least one monitoring means for monitoring the production, the components having a feature value that is controllable, the display system including: a control unit; a display unit; and a storage unit. The storage unit is configured to store a relationship between two or more components of the plurality of components as a causal relationship model regarding an abnormality that may occur in the production facility, and the control unit is configured to: display, on the display unit, a model diagram that has nodes corresponding to the components and one or more edges connecting the nodes to each other, based on the causal relationship model; and when an abnormality occurs in the production facility, change a display mode of at least either a node corresponding to the component related to the abnormality or an edge connected to the node.

## Description

### TECHNICAL FIELD

The present invention relates to a display system, a display method, and a display program.

### RELATED ART

Patent Document 1 proposes a method for monitoring the state of a facility by dividing operating states into modes based on event signals, creating a normal model for each mode, and performing abnormality determination based on the created normal models. According to this method, the sufficiency of the learning data used to create the normal models is checked, and the thresholds to be used to determine abnormality are set based on the results of the check, so that incorrect notifications, in which a normal state is determined to be an abnormal state, can be prevented from being provided.

Patent Document 2 proposes a method for detecting the occurrence of an abnormality in products produced in a production facility. Specifically, Patent Document 2 proposes a method of classifying pieces of data collected from a production system into normal and abnormal cases of the products, identifying feature values that produce a significant difference between the normal case and the abnormal case, and diagnosing products regarding whether or not the products are normal, based on the identified feature values.

### RELATED ART DOCUMENTS

### PATENT DOCUMENTS

Patent Document 1: JP 2015-172945A
Patent Document 2: JP 2010-277199A

### SUMMARY OF THE INVENTION

### PROBLEM TO BE SOLVED BY THE INVENTION

If an abnormality occurs in a production facility, such an abnormality must be immediately resolved. However, it is common that the user needs to investigate the cause of the abnormality with reference to a manual or the like before taking an action to resolve the abnormality. However, looking up the manual every time an abnormality occurs takes time and may delay the action. The present invention has been made to solve this problem, and aims to provide a display system, a display method, and a display program that make it possible to easily check components related to abnormalities that may occur in a production facility.

### MEANS FOR SOLVING THE PROBLEM

A display system according to the present invention is a display system to be provided in a production facility that produces products and includes, as components, at least one driving means for driving the production facility and at least one monitoring means for monitoring the production, the components having a feature value that is controllable, the display system including: a control unit; a display unit; and a storage unit. The storage unit is configured to store a relationship between two or more components of the plurality of components as a causal relationship model regarding an abnormality that may occur in the production facility, and the control unit is configured to: display, on the display unit, a model diagram that has nodes corresponding to the components and one or more edges connecting the nodes to each other, based on the causal relationship model; and when an abnormality occurs in the production facility, change a display mode of at least either a node corresponding to the component related to the abnormality or an edge connected to the node.

With this configuration, it is possible to store a relationship between two or more components of the components of the production facility as a causal relationship model, and display, on the display unit, a model diagram that has nodes corresponding to the components and one or more edges connecting the nodes to each other, based on the causal relationship model. In addition, when an abnormality occurs in the production facility, it is possible to change the display mode of at least either a node corresponding to the component related to the abnormality or the edge connected to the node. Therefore, it is easy for the user to visually check the component related to the abnormality.

In the above-described display system, the control unit may be configured to change the display mode when a sign of the abnormality is detected.

As a result, not only when an abnormality occurs, but also when a sign of an abnormality is detected, the display mode of the node or the like corresponding to the component related to the sign is changed, which makes it easier to visually recognize that the component corresponding to the node or the like is related to the sign of an abnormality. Therefore, it is possible to take countermeasure before an abnormality occurs.

In the above-described display system, the control unit may be configured to: when the feature value reaches a first reference value, determine that a sign of the abnormality has occurred and change the display mode to a first display mode; and when the feature value reaches a second reference value, determine that the abnormality has occurred and change the display mode to a second display mode.

In the above-described display system, the storage unit may be configured to store changes over time in the feature value(s) of the components included in the causal relationship model, and the control unit may be configured to display the changes over time in the feature value(s), on the display unit.

With this configuration, the user can visually check changes over time in a feature value of a relevant component when an abnormality occurs. As a result, for example, it is possible to perform an a posteriori check regarding how the feature value has changed to cause the abnormality. Alternatively, by visually checking changes in the feature value, it is possible to detect a sign of the occurrence of an abnormality.

In the above-described display system, the control unit may be configured to: generate and store causal relationship models in the storage unit chronologically, under a predetermined condition; display a list of the causal relationship models stored in the storage unit, on the display unit; and display a causal relationship model selected from the list, on the display unit, in response to a request from a user.

With this configuration, it is possible to chronologically check changes in the causal relationship model. The predetermined condition may be, for example, a condition that a causal relationship model changes, a condition that an anomality occurs and the above-described display mode of the node changes, a condition that the operation of the production facility is started/stopped, or the like. The user can visually check each of the causal relationship models stored under such conditions, retroactively. Therefore, for example, it is possible to perform an a posteriori check regarding changes over time in the feature value, and the components at the time of the occurrence of the abnormality.

A display method according to the present invention is a display method for displaying, on a display unit, a causal relationship between components of a production facility related to an abnormality that may occur in the production facility, the production facility producing products and including, as the components, at least one driving means for driving the production facility and at least one monitoring means for monitoring the production, the components having a feature value that is controllable, the display method including: a step of storing a relationship between two or more components of the plurality of components as a causal relationship model regarding an abnormality that may occur in the production facility; a step of displaying, on the display unit, a model diagram that has nodes corresponding to the components and one or more edges connecting the nodes to each other, based on the causal relationship model; and a step of, when an abnormality occurs in the production facility, changing a display mode of at least either a node corresponding to the component related to the abnormality or an edge connected to the node.

A display program according to the present invention is a display program for displaying, on a display unit, a causal relationship between components of a production facility related to an abnormality that may occur in the production facility, the production facility producing products and including, as the components, at least one driving means for driving the production facility and at least one monitoring means for monitoring the production, the components having a feature value that is controllable, the display program enabling a computer to carry out: a step of storing a relationship between two or more components of the plurality of components as a causal relationship model regarding an abnormality that may occur in the production facility; a step of displaying, on the display unit, a model diagram that has nodes corresponding to the components and one or more edges connecting the nodes to each other, based on the causal relationship model; and a step of, when an abnormality occurs in the production facility, changing a display mode of at least either a node corresponding to the component related to the abnormality or an edge connected to the node.

### EFFECTS OF THE INVENTION

According to the present invention, it is possible to easily check components related to abnormalities that may occur in a production facility.

### BRIEF DESCRIPTION OF THE DRAWINGS

- FIG. 1: schematically illustrates an example of a scenario to which the present invention is applied.
- FIG. 2: is a block diagram showing a hardware configuration of an analysis device according to an embodiment of the present invention.
- FIG. 3: is a schematic diagram showing a production facility according to an embodiment of the present invention.
- FIG. 4: is a block diagram showing a functional configuration of the analysis device.
- FIG. 5: is a flowchart showing an example of building a causal relationship model.
- FIG. 6: is an example of a relationship between a control signal and a takt time.
- FIG. 7A: is an example of a causal relationship model.
- FIG. 7B: is an example of a causal relationship model.
- FIG. 7C: is an example of a causal relationship model.
- FIG. 8: is a schematic diagram showing a packaging machine overlaid with nodes of a causal relationship model.
- FIG. 9A: is an example of a screen on a display device.
- FIG. 9B: is an example of a screen on the display device.
- FIG. 9C: is an example of a screen on the display device.
- FIG. 10: is an example of a screen on the display device displayed when an abnormality has occurred.
- FIG. 11: is an example of a screen on the display device displayed when a sign of an abnormality has been detected.
- FIG. 12A: is an example of a screen on the display device showing a list of causal relationship models that have been stored.
- FIG. 12B: is an example of a screen on the display device showing a list of causal relationship models that have been stored.
- FIG. 12C: is an example of a screen on the display device showing a list of causal relationship models that have been stored.
- FIG. 13: is another example of a screen on the display device.

### EMBODIMENTS OF THE INVENTION

Hereinafter, an embodiment according to one aspect of the present invention (hereinafter also referred to as the "present embodiment") will be described with reference to the drawings. However, the embodiment described below is merely an example of the present invention in all aspects. It goes without saying that various modifications and variations can be made without departing from the scope of the present invention. That is to say, when carrying out the present invention, specific configurations depending on the embodiment may be adopted as appropriate. The data that appears in the present embodiment is described using a natural language. However, more specifically, the data is specified using, for example, a computer-recognizable pseudo-language, commands, parameters, or a machine language.

### <1. Application Example>

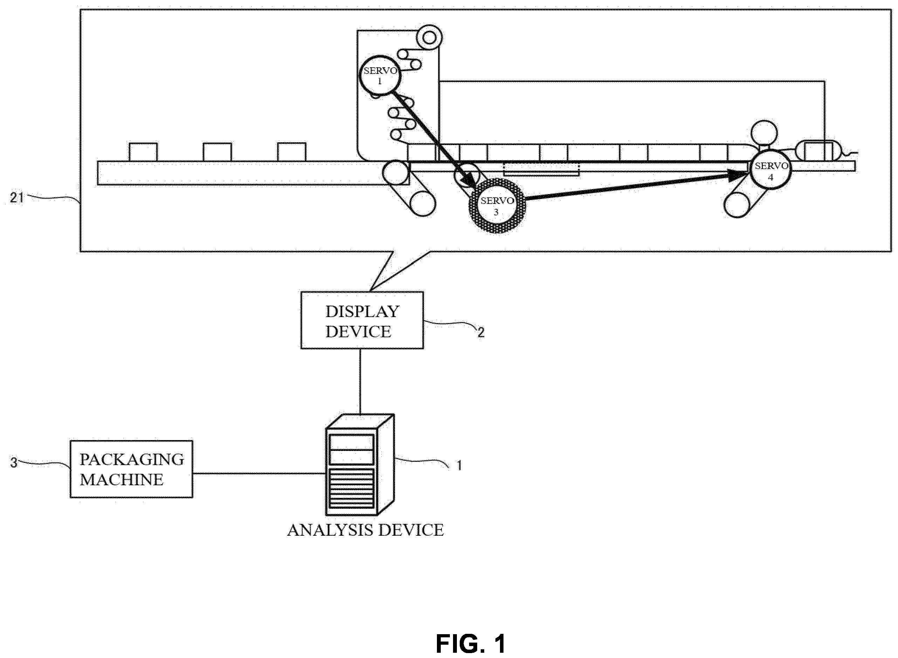

First, an example of a scenario to which the present invention is applied will be described with reference to FIG. 1. FIG. 1 schematically illustrates an example of a scenario to which a production system according to the present embodiment is applied. The production system according to the present embodiment includes a packaging machine 3, which is an example of a production facility, an analysis device 1, and a display device 2. The analysis device 1 is a computer configured to derive causal relationships between servomotors (driving means) and various sensors (monitoring means) provided in the packaging machine 3, and display the causal relationships. Hereinafter, the driving means such as the servomotors and the monitoring means such as the various sensors are referred to as components.

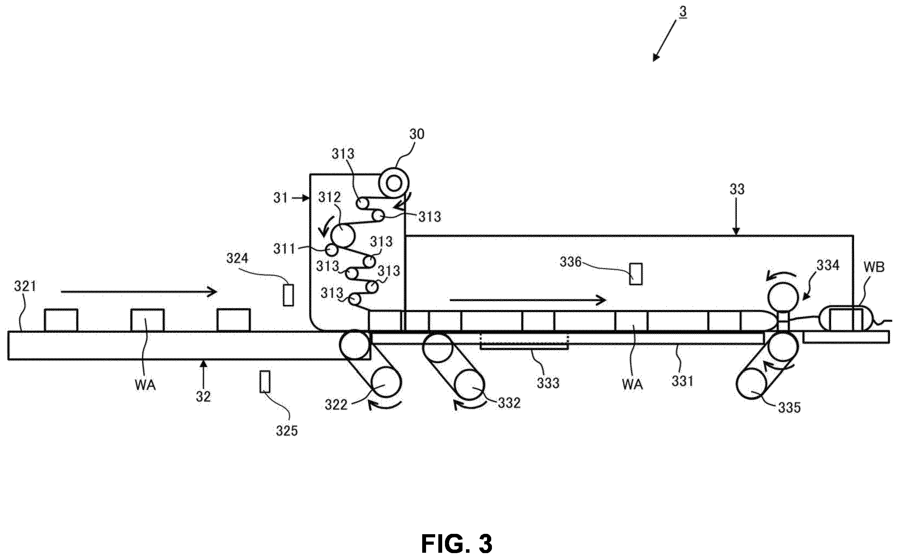

The analysis device 1 generates a causal relationship model representing relationships between components regarding an abnormality that may occur in the packaging machine 3, and displays the causal relationship model on a screen 21 of the display device 2. The example in FIG. 1 shows a causal relationship model for the case in which wear of a leather brake belt for a film roll 30 described below (see FIG. 3) occurs as an abnormality. That is to say, servos 1, 3, and 4 of the plurality of servomotors provided in the packaging machine 3 are displayed as nodes, and are connected to each other by edges. The direction of each edge indicates a causal relationship. That is to say, the edges show that, when the leather belt wears, the servo 1 affects the servo 3, and the servo 3 affects the servo 4, resulting in the wear of the leather belt. Therefore, the operator of the packaging machine 3 should check the cause of the abnormality in the order of the servos 4, 3, and 1. However, as described in detail below, each servomotor has a plurality of controllable feature values such as torque and position, and any of the respective feature values of each servomotor constitutes the above causal relationship.

As illustrated in the example in FIG. 1, the screen 21 of the display device 2 displays a schematic diagram showing the packaging machine 3, and a causal relationship model (hereinafter also referred to as a model diagram) is superimposed on the schematic diagram. In this example, the outer edge of the node indicating the servo 3 is colored, and thus the node is displayed in a mode different from the other nodes. This facilitates visibility of the component related to the abnormality that has occurred, and the node corresponding thereto. For example, if at least one of the feature values of the servo 3 deviates from a predetermined reference value and an abnormality occurs, the node indicating the servo 3 is displayed in a different mode, which makes it easier to visually check the component related to the abnormality. Therefore, it is possible to swiftly take actions to resolve the abnormality. Although the example in FIG. 1 shows a schematic diagram of the packaging machine, this is not essential, and it suffices if at least a model diagram is shown.

In the above description, the packaging machine 3 is shown as an example of the production facility, but any production facility may be employed as long as some kind of product can be produced, and the type thereof need not be particularly limited. The type of its components need not be particularly limited and may be selected as appropriate depending on the embodiment. Examples of the components include a conveyor, a robot arm, a servomotor, a cylinder (such as a molding machine), a suction pad, a cutter device, and a sealing device. Instead of the above-described packaging machine 3, the production facility may be, for example, a multifunction apparatus including a printer, a mounting machine, a reflow oven, a board inspection device, and so on. Furthermore, instead of a device that involves some physical actions as described above, the production facility may include, for example, a device that performs internal processing such as a device that detects some information with various sensors, a device that acquires data from various sensors, a device that detects some information from the acquired data, a device that performs information processing on the acquired data, and so on. One production facility may be constituted by one or more devices, or constituted by a portion of a device. When the same device performs a plurality of kinds of processes, the device may be regarded as a different component for each kind of process. For example, if the same device performs a first process and a second process, the device may be regarded as a first component when performing the first process, and may be regarded as a second component when performing the second process.

### <2. Configuration Examples>

### <2-1. Hardware Configuration>

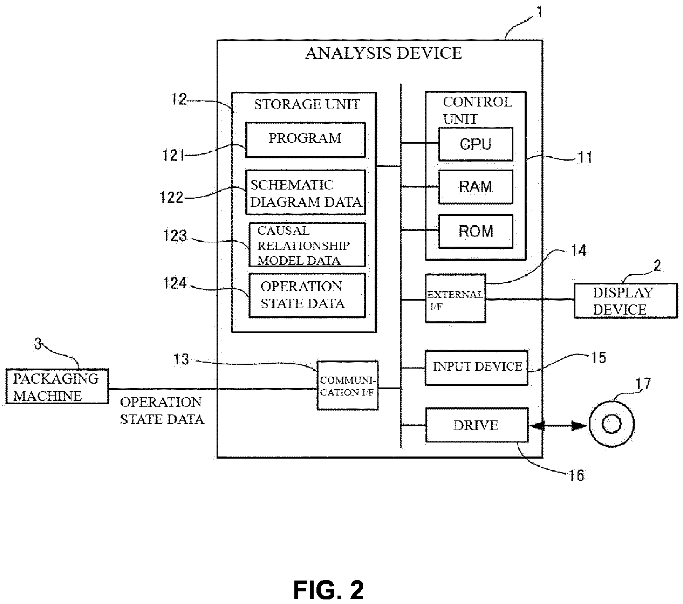

Next, an example of a hardware configuration of the production system according to the present embodiment will be described. FIG. 2 is a block diagram showing an example of a hardware configuration of the analysis device 1 according to the present embodiment, and FIG. 3 is a diagram showing a schematic configuration of the packaging machine.

### <2-1-1. Analysis Device>

First, an example of a hardware configuration of the analysis device 1 according to the present embodiment will be described with reference to FIG. 2. As shown in FIG. 2, the analysis device 1 is a computer in which a control unit 11, a storage unit 12, a communication interface 13, an external interface 14, an input device 15, and a drive 16 are electrically connected to each other.

The control unit 11 includes a CPU (Central Processing Unit), a RAM (Random Access Memory), a ROM (Read Only Memory), and so on, and controls each component to perform information processing. The storage unit 12 is, for example, an auxiliary storage device such as a hard disk drive or a solid state drive, and stores a program 121 that is to be executed by the control unit 11, schematic diagram data 122, causal relationship model data 123, operation state data 124, and so on.

The program 121 is a program for generating a causal relationship model representing a relationship between an abnormality occurring in the packaging machine 3 and a component, displaying the model on the display device 2, and so on. The schematic diagram data 122 is data that represents a schematic diagram showing the target production facility, and is data that represents a schematic diagram showing the packaging machine 3 in the present embodiment. The schematic diagram need only be a schematic diagram of the entire packaging machine, showing at least the locations of the components indicated by the causal model, and does not necessarily have to be a detailed diagram. Alternatively, the diagram may be an enlarged diagram showing only a portion of the packaging machine 3.

The causal relationship model data 123 is data that represents a causal relationship model regarding the occurrence of an abnormality built using the feature values of the components extracted from the packaging machine 3. That is to say, the causal relationship model data 123 is data that represents the causal relationship between the components when an abnormality occurs. In this analysis device 1, as will be described later, causal relationship model data is generated from the feature values or the like extracted from the packaging machine 3. However, the analysis device 1 may also store causal relationship model that has been generated in advance in an external device.

The operation state data 124 is data indicating the operation state of the packaging machine 3. Although details will be described later, for example, the operation state data 124 may be data that can be generated through the driving of the components described above, such as measurement data regarding torque, speed, acceleration, temperature, and pressure, for example. When the component is a sensor, the operation state data 124 may be the result of detection, for example, detection data indicating "on" or "off", which represents whether or not an item WA is present.

The communication interface 13 is, for example, a wired LAN (Local Area Network) module, a wireless LAN module, or the like, and is an interface for performing wired or wireless communication. That is to say, the communication interface 13 is an example of a communication unit configured to perform communication with another device. The analysis device 1 according to the present embodiment is connected to the packaging machine 3 via the communication interface 13.

The external interface 14 is an interface for connecting to an external device, and is configured as appropriate for the external device to be connected. In the present embodiment, the external interface 14 is connected to the display device 2. Note that the display device 2 may be a well-known liquid crystal display, touch panel display, or the like.

The input device 15 is a device for inputting, such as a mouse or a keyboard.

The drive 16 is, for example, a CD (Compact Disk) drive, a DVD (Digital Versatile Disk) drive, or the like, and is a device for reading a program stored on a storage medium 17. The type of the drive 16 may be appropriately selected according to the type of the storage medium 17. Note that at least some of the various kinds of data 122 to 124 including the programs 121 stored in the storage unit may be stored on this storage medium 17.

The storage medium 17 is a medium that stores information such as programs through electrical, magnetic, optical, mechanical, or chemical actions so that a computer, another device, a machine, and so on can read the information such as the programs. FIG. 2 illustrates a disk-type storage medium such as a CD or DVD as an example of the storage medium 17. However, the type of the storage medium 17 is not limited to the disk type, and may also be a type other than the disk type. An example of a storage medium of a type other than the disk type is a semiconductor memory such as a flash memory.

Regarding the specific hardware configuration of the analysis device 1, it is possible to omit, replace, or add components as appropriate depending on the embodiment. For example, the control unit 11 may also include a plurality of processors. The analysis device 1 may also be constituted by a plurality of information processing device. An information processing device designed exclusively for the service to be provided may also be used as the analysis device 1, or a general-purpose server device or the like may be used instead.

### <2-1-2. Packaging Device>

Next, an example of a hardware configuration of the packaging machine 3 according to the present embodiment will be described with reference to FIG. 3. FIG. 3 schematically illustrates an example of a hardware configuration of the packaging machine 3 according to the present embodiment. The packaging machine 3 is a so-called horizontal pillow packaging machine, and is a device for packaging items WA such as food (for example, dried noodles) or stationery (for example, an eraser). However, the type of the items WA may be selected depending on the embodiment as appropriate, and is not particularly limited. The packaging machine 3 mainly includes three devices, i.e., a film transport unit 31 that includes a film roll 30 formed by winding a packaging film, and transports the packaging film, an item transport unit 32 that transports the items WA, and a bag-making unit 33 that packages the items with the packaging film.

The packaging film can be, for example, a resin film such as a polyethylene film. The film roll 30 is provided with a winding core, and the packaging film is wound around the winding core. The winding core is supported so as to be rotatable about an axis, which enables the film roll 30 to feed out the packaging film while rotating.

The film transport unit 31 includes a drive roller that is driven by a servomotor 311 (the servo 1), a passive roller 312 to which a rotational force is applied from the drive roller, and a plurality of pulleys 313 that guide the packaging film while applying a tension thereto. Thus, the film transport unit 31 is configured to feed out the packaging film from the film roll 30 and transport the fed-out packaging film to the bag-making unit 33 without relaxing it.

The item transport unit 32 includes a conveyor 321 that conveys the item WA to be packaged, and a servo motor 322 (the servo 2) that drives the conveyor 321. As illustrated in FIG. 3, the item transport unit 32 passes below the film transport unit 31 and is connected to the bag-making unit 33. As a result, the item WA transported by the item transport unit 32 is supplied to the bag-making unit 33, and is packaged with the packaging film supplied from the film transport unit 31. A fiber sensor 324 (a sensor 1) for detecting the position of the item WA is provided above a downstream section of the conveyor 321. Furthermore, a fiber sensor 325 (a sensor 2) for detecting stranding of the item WA is provided below the conveyor 321. These sensors 1 and 2 detect whether or not the item WA is transported to the correct position in order to be properly packaged.

The bag-making unit 33 includes a conveyor 331, a servo motor 332 (a servo 3) that drives the conveyor 331, a center sealing unit 333 that seals the packaging film in the transport direction, and an end sealing unit 334 that cuts the packaging film at both ends in the transport direction and seals the packaging film at each end.

The conveyor 331 transports the item WA transported from the item transport unit 32 and the packaging film supplied from the film transport unit 31. The packaging film supplied from the film transport unit 31 is supplied to the center sealing unit 333 while being appropriately folded so that both side edge portions in the width direction thereof overlap each other. The center sealing unit 333 is constituted by, for example, a pair of left and right heating rollers (heaters 1 and 2), and heats and seals both side edge portions of the folded packaging film in the transport direction. As a result, the packaging film is formed into a tubular shape. The item WA is put into this tubular packaging film. A fiber sensor 336 (a sensor 3) for detecting the position of the item WA is provided upstream of the end sealing unit 334, above the conveyor 331.

On the other hand, the end sealing unit 334 includes, for example, a roller that is driven by a servomotor 335, a pair of cutters that are opened and closed by the rotation of the roller, and heaters (heaters 3) that are provided on both sides of each cutter. With these components, the end sealing unit 334 is configured to cut the tubular packaging film in the direction orthogonal to the transport direction and to heat and seal the cut portion. After passing through the end sealing unit 334, the leading end of the tubular packaging film is sealed on both sides in the transport direction and is separated from the following portion to form a package WB that encloses the item WA.

### <2-1-3. Packaging Process>

The packaging machine 3 described above can package the item WA through the following process. That is to say, the film transport unit 31 feeds out the packaging film from the film roll 30. Also, the item transport unit 32 transports the item WA to be packaged. Next, the center sealing unit 333 of the bag-making unit 33 forms the fed-out packaging film into a tubular shape. After the item WA is put into the formed tubular packaging film, the tubular packaging film is cut in the direction orthogonal to the transport direction by the end sealing unit 334, and both sides of the cut portion in the transport direction are heated and sealed. Thus, a horizontal pillow type package WB that encloses the item WA is formed. That is to say, packaging of the item WA is complete.

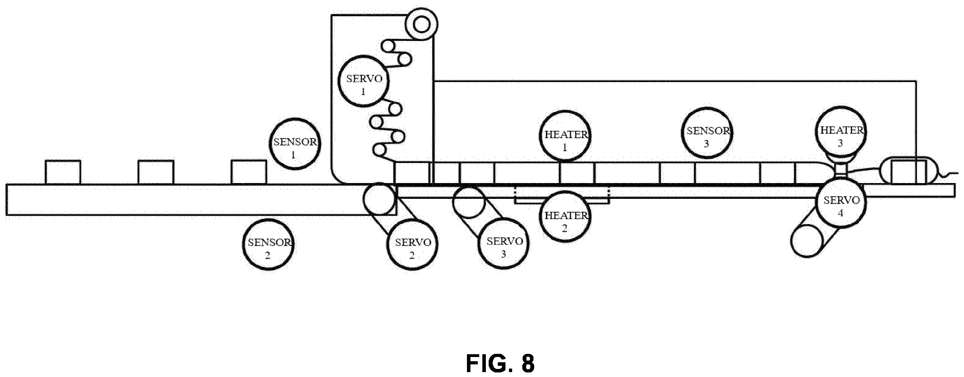

Note that the drive control of the packaging machine 3 can also be performed using a PLC or the like provided separately from the packaging machine 3. If this is the case, the operation state data 124 described above can be acquired from the PLC. In addition, for example, ten components are set in the packaging machine 3 with the above-described configuration, in order to construct causal relationships regarding an abnormality (see FIG. 8, for example). That is to say, the above-described servos 1 to 4, heaters 1 to 3, and sensors 1 to 3 are set as components, and a causal relationship model is built regarding the causal relationships between these components when an abnormality occurs. Details will be described later.

### <2-2. Functional Configuration>

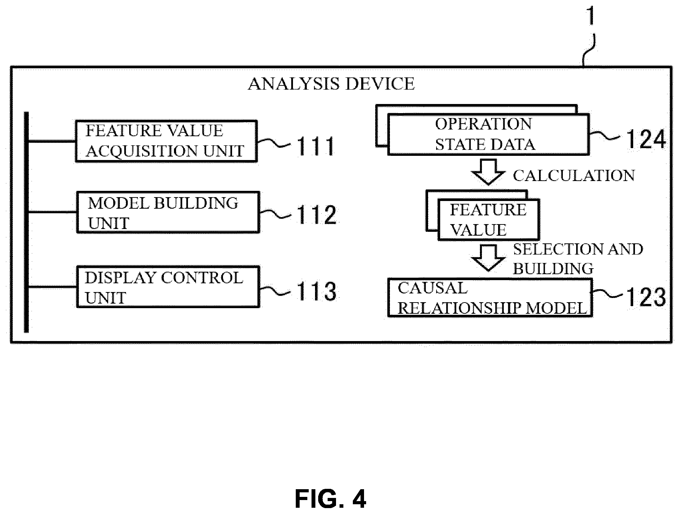

Next, the functional configuration (software configuration) of the analysis device 1 will be described. FIG. 4 shows an example of a functional configuration of the analysis device 1 according to the present embodiment. The control unit 11 of the analysis device 1 loads the program 121 stored in the storage unit 12 to the RAM. Thereafter, the control unit 11 causes the CPU to interpret and execute the program 121 loaded to the RAM, to control each component. As a result, as shown in FIG. 4, the analysis device 1 according to the present embodiment functions as a computer that includes a feature value acquisition unit 111, a model building unit 112, and a display control unit 113.

The feature value acquisition unit 111 acquires a plurality of types of feature values calculated from operation state data 124 that indicates the operation states of the packaging machine 3, for both the normal case in which the packaging machine 3 has normally formed the package WB and the abnormal case in which an abnormality has occurred in the formed package WB. Using the plurality of types of feature values acquired for the normal case and the abnormal case, the model building unit 112 selects feature values that are useful for prediction of an abnormality from the plurality of types of feature values acquired, based on a predetermined algorithm for deriving the degree of association between an abnormality occurring in the formed package WB and each type of feature value. Thereafter, using the selected feature values, the model building unit 112 builds a causal relationship model 123 indicating a causal relationship between the components when an abnormality occurs.

The display control unit 113 has the function of displaying a schematic diagram of the above-described packaging machine 3, a causal relationship model, various types of feature values, and so on, on the screen 21 of the display device 2. In addition, the display control unit 113 performs control to display various kinds of information on the screen 21 of the display device 2.

Each function of the analyzer 1 will be described in detail in the operation example below. Note that the present embodiment describes an example in which all the above functions are realized using a general-purpose CPU. However, some or all of the above functions may be realized using one or more dedicated processors. In addition, regarding the functional configuration of the analysis device 1, the functions may be omitted, replaced, or added as appropriate depending on the embodiment.

### <3. Operation Example>

Next, an operation example of the production system with the above-described configuration will be described.

### <3-1. Creation of Causal Relationship Model>

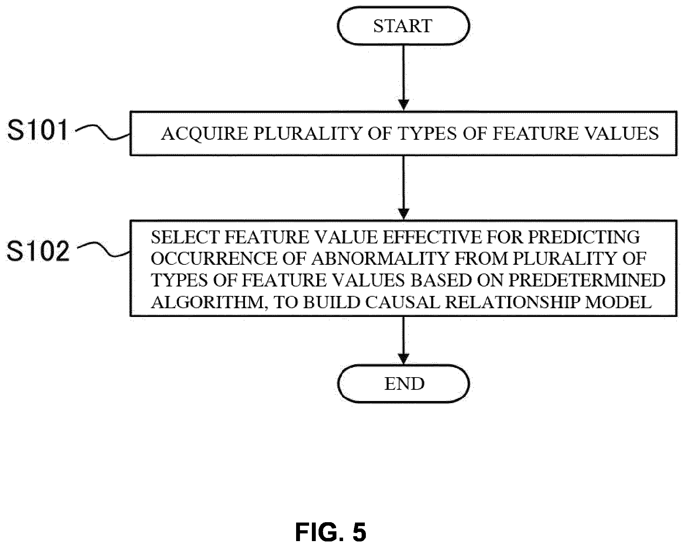

First, with reference to FIG. 5, a processing procedure through which the analysis device creates a causal relationship model will be described. FIG. 5 illustrates an example of a processing procedure for the analysis device when creating a causal relationship model.

### (Step S101)

In the first step S101, the control unit 11 of the analysis device 1 functions as the feature value acquisition unit 111, and acquires a plurality of types of feature values calculated from operation state data 124 that indicates the operation states of the packaging machine 3, for both the normal case in which the packaging machine 3 has normally formed the package WB and the abnormal case in which an abnormality has occurred in the formed package WB.

Specifically, first, the control unit 11 collects operation state data 124 classified into data for the normal case and data for the abnormal case. The type of operating state data 124 to be collected is not particularly limited as long as it indicates the state of the packaging machine 3. In the present embodiment, the operating state data 124 may be data that can be generated through the driving of the components described above, and examples of which include measured data such as torque, speed, acceleration, temperature, and pressure.

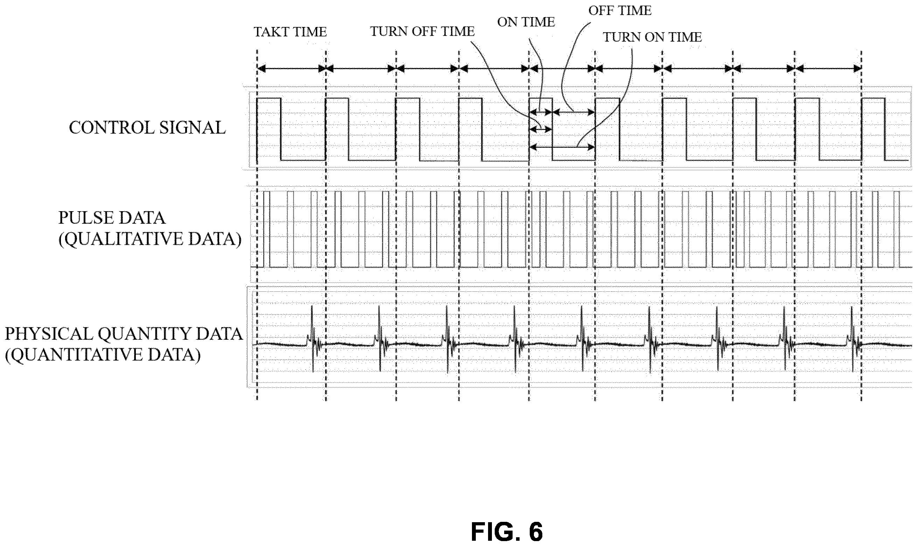

When the component is a sensor, the operating state data 124 can be measured data such as an ON time, an OFF time, a turn ON time, and a turn OFF time. The ON time and the OFF time are respectively the total time during which the control signal is ON and the total time during which the control signal is OFF within the target frame, as shown in FIG. 6, which will be described later. The turn ON time and the turn OFF time are respectively the time until the control signal turns ON and the time until the control signal turns OFF for the first time within the target frame. In addition, the control unit 11 can acquire, as the operation state data 124, the detection results of the sensors, for example, detection data indicating whether or not an item WA is present, by "on" or "off". Note that the collected operation state data 124 may be stored in the storage unit 12 or stored in an external storage device.

Next, the control unit 11 divides the collected operation state data 124 into frames to define a processing range for calculating features values. For example, the control unit 11 may divide the operation state data 124 into frames of a fixed time length. However, the packaging machine 3 does not necessarily operate at regular time intervals. Therefore, if the operation state data 124 is divided into frames of a fixed time length, the operations of the packaging machine 3 reflected in the frames may be shifted with respect to each other.

Therefore, in the present embodiment, the control unit 11 divides the operation state data 124 into frames of a takt time. The takt time is the time required to produce a predetermined number of products, i.e., the time required to form a predetermined number of packages WB. This takt time can be specified based on a signal that controls the packaging machine 3, which is, for example, a control signal that controls the operation of each servomotor or the like of the packaging machine 3.

The relationship between the control signal and the takt time will be described with reference to FIG. 6. FIG. 6 schematically illustrates the relationship between the control signal and the takt time. As shown in FIG. 6, a control signal for a production facility that repeatedly produces products, such as the packaging machine 3, is a pulse signal that periodically alternates between "on" and "off' in response to the production of a predetermined number of products.

For example, in the control signal shown in FIG. 6, "on" and "off" each appear once during the formation of one package WB. Therefore, the control unit 11 can acquire this control signal from the packaging machine 3 and determine the time from a rise ("on") to the next rise ("on") of the acquired control signal as the takt time. Thereafter, as shown in FIG. 6, the control unit 11 can divide the operation state data 124 into frames each corresponding to the takt time.

Note that the type of the control signal is not particularly limited as long as the signal can be used to control the packaging machine 3. For example, if the packaging machine 3 includes a sensor for detecting a mark provided on a packaging film, and a signal output from this sensor is used to adjust the feeding amount of the packaging film, this output signal from the sensor may be used as a control signal.

Next, the control unit 11 calculates feature values from each frame of the operation state data 124. The type of feature values is not particularly limited as long as each feature value indicates a feature of the production facility.

For example, if the operation state data 124 is quantitative data such as the above measured data (the physical quantity data in FIG. 6), the control unit 11 may calculate the amplitude, the maximum value, the minimum value, the average value, the variance value, the standard deviation, the autocorrelation coefficient, the maximum value of a power spectrum obtained through a Fourier transform, the skewness, the pointedness, and so on as feature values.

Alternatively, for example, if the operation state data 124 is qualitative data such as the above detection data (the pulse data in FIG. 6), the control unit 11 may calculate the "on" time, the "off" time, the duty ratio, the number of "on" times, the number of "off' times, and so on as feature values.

Furthermore, the feature value may be derived not only from a single type of operation state data 124, but from a plurality of types of operation state data 124. For example, the control unit 11 may calculate a cross-correlation coefficient, a ratio, a difference, a synchronization deviation amount, a distance, and so on between frames corresponding to two types of operation state data 124 as feature values.

The control unit 11 calculates a plurality of types of feature values as described above, from the operation state data 124. As a result, the control unit 11 can acquire a plurality of types of feature values calculated from the operation state data 124 for both the normal case and the abnormal case. Note that the processing from the collection of the operating state data 124 to the calculation of feature values may be performed by the analysis device 1 or various devices that control the packaging machine 3, instead of the analysis device 1. In addition, the control unit 11 may discretize the various types of feature values. For example, values higher than a threshold may be regarded as "1" or "high", and values lower than the threshold may be regarded as "0" or "low".

### (Step S102)

In the next step S102, the control unit 11 functions as the model building unit 112 to select a feature value that is effective for predicting an abnormality, from the plurality of types of feature values in the normal case and the abnormal case acquired in step S101, based on a predetermined algorithm that identifies the degree of association between the abnormalities that may occur in the formed package WB and the plurality of types of feature values.

The predetermined algorithm may be formed using, for example, a Bayesian network. A Bayesian network is one of graphical modeling methods for expressing the causal relationship between a plurality of random variables in the form of a directed acyclic graph structure, and expresses the causal relationship between random variables using a conditional probability.

The control unit 11 uses the acquired feature values and the state of the package WB as random variables, i.e., sets the acquired feature values and the state of the package WB to the nodes, to build a Bayesian network, thereby being able to derive the causal relationship between the acquired feature values and the state of the package WB. A known method may be used to build the Bayesian network. For example, the Greedy Search algorithm, the Stingy Search algorithm, or a structure learning algorithm such as the exhaustive search method may be used to build the Bayesian network. The AIC (Akaike's Information Criterion), C4.5, the CHM (Cooper Herskovits Measure), the MDL (Minimum Description Length), the ML (Maximum Likelihood), or the like may be used as an evaluation criterion for the built Bayesian network. Also, a pairwise method, a listwise method, or the like may be used as a processing method for the case in which missing values are included in the learning data (operation state data 124) used to build the Bayesian network.

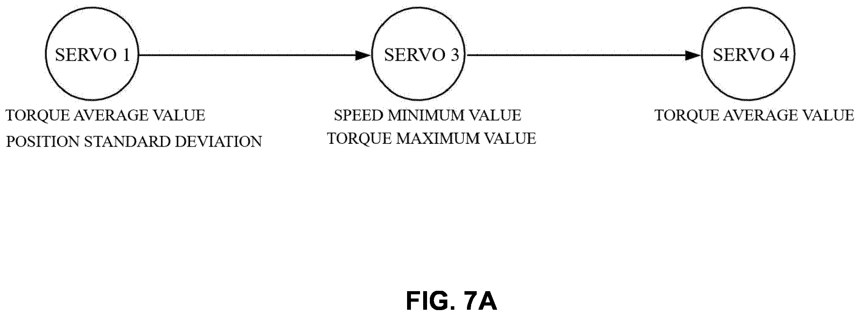

For example, FIG. 7A shows a causal model when the abnormal event is leather belt wear. That is to say, a causal relationship model indicating the following relationship is built: the model indicating that the average torque value and the standard deviation of the position, which are the feature values of the servo 1, affect the minimum speed value and the maximum torque value, which are the feature values of the servo 3, and these values in turn affect the average torque value of the servo 4.

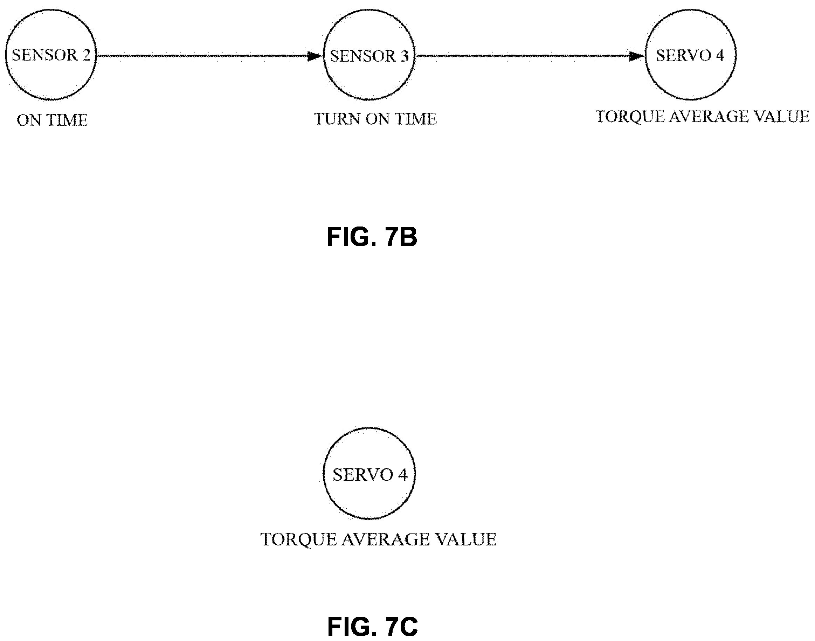

FIG. 7B shows a causal relationship model when the abnormal event is the looseness of the chain of the conveyor 321 of the item transport unit 32. That is to say, a causal relationship model indicating the following relationship is built: the ON time, which is the feature value of the sensor 2, affects the turn ON time, which is the feature value of the sensor 3, and this value in turn affects the torque average value of the servo 4.

FIG. 7C shows a causal relationship model when the abnormal event is a packaging film sealing failure. For this abnormal event, a causal relationship indicating that the only cause is the torque average value of the server 4 is built. The causal models built in this manner are stored in the storage unit 12 as pieces of causal relationship model data 123.

Note that the method of using the acquired feature values and the state of the packaged WB as random variables can be set as appropriate depending on the embodiment. For example, the state of the packaged WB can be regarded as a random variable by defining the event that the packaged WB is normal as "0" and defining the event that an abnormality occurs in the packaged WB as "1", and associating each event with a probability. Alternatively, for example, the states of each feature value can be regarded as a random variable by defining the event in which the feature value is no greater than a threshold value as "0" and defining the event in which the feature value is greater than the threshold value as "1", and associating each event with a probability. Note that the number of states to be set for each feature value is not limited to two and may also be three or more.

### <3-2. Display of Causal Relationship Model>

Next, the display of the causal relationship model built as described above will be described. In this case, the control unit 11 of the analysis device 1 functions as a display control unit 113. The display control unit 113 controls the display of the screen 21 described below. First, the display control unit 113 overlays a schematic diagram 122 read out from the storage unit 12 and the above-described causal relationship model 123 on the screen 21 of the display device 2. FIG. 8 shows a diagram in which components that may cause an abnormal event in the present embodiment are overlaid on the schematic diagram. Here, as described above, the servos 1 to 4, the heaters 1 to 3, and the sensors 1 to 3, which are nodes of the causal relationship model, are arranged at the installation positions thereof in the schematic diagram. Thereafter, on the screen 21 of the display device 2, which will be described below, the components to be used to build a causal relationship model are selected as nodes from the above components according to the abnormal event selected by the user, and edges with arrows indicating causal relationships are displayed together with the nodes.

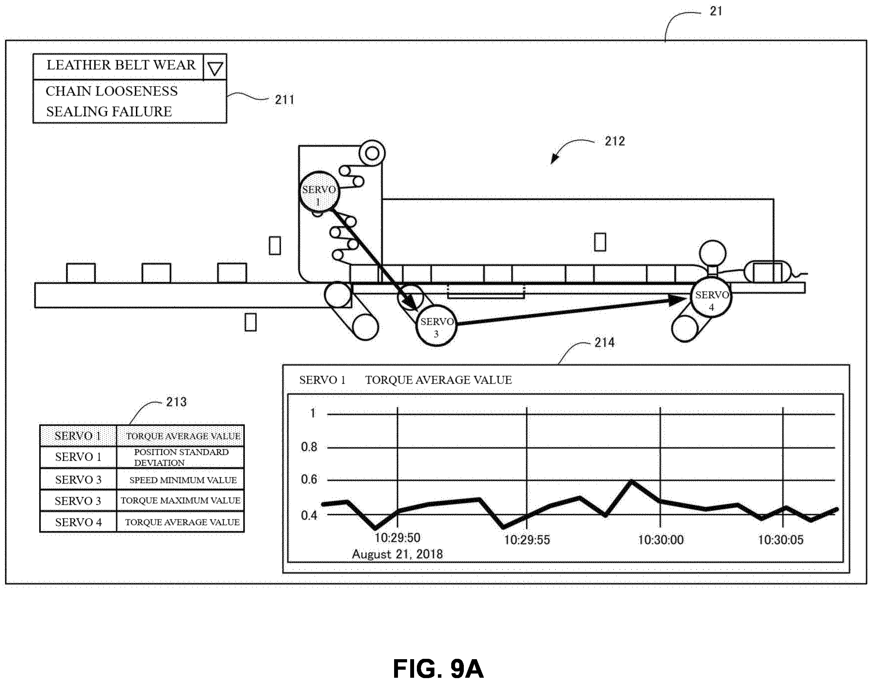

FIG. 9A is an example of the screen 21 of the display device 2 displaying a causal relationship model. The user can operate this screen 21, using the above-described input device 15. In this screen 21, a selection box 211 that is used to select an abnormal event is displayed on the upper left, which allows the user to select an abnormal event, using a pull-down menu. In this example, leather belt wear, chain looseness, and sealing failure are indicated as abnormal events, and leather belt wear is selected from these events.

A model diagram 212 in which a schematic diagram showing the packaging machine and a causal relationship model are overlaid with each other is displayed below the selection box 211. In the example in FIG. 9A, a model diagram for the case in which leather belt wear is the abnormal event is displayed. Also, a list 213 is displayed at the lower left of this model diagram 212, in which components and the feature values thereof corresponding to the selected abnormal event are shown. The user can select one of the components and the feature value thereof from the list 213. When the user selects one component, the component corresponding thereto in the model diagram 212 is highlighted. In this example, "SERVO 1 - TORQUE AVERAGE VALUE" is selected from the list 213, and accordingly the servo 1 in the model diagram 212 is highlighted. Various methods of highlighting can be used, such as coloring and blinking, as long as the node can be distinguished from other nodes.

Furthermore, a graph 214 is displayed on the right side of the list 213, indicating changes over time in the selected feature. In this example, "SERVO 1 - TORQUE AVERAGE VALUE" is selected, and accordingly a line graph 214 indicating changes over time in the value is displayed.

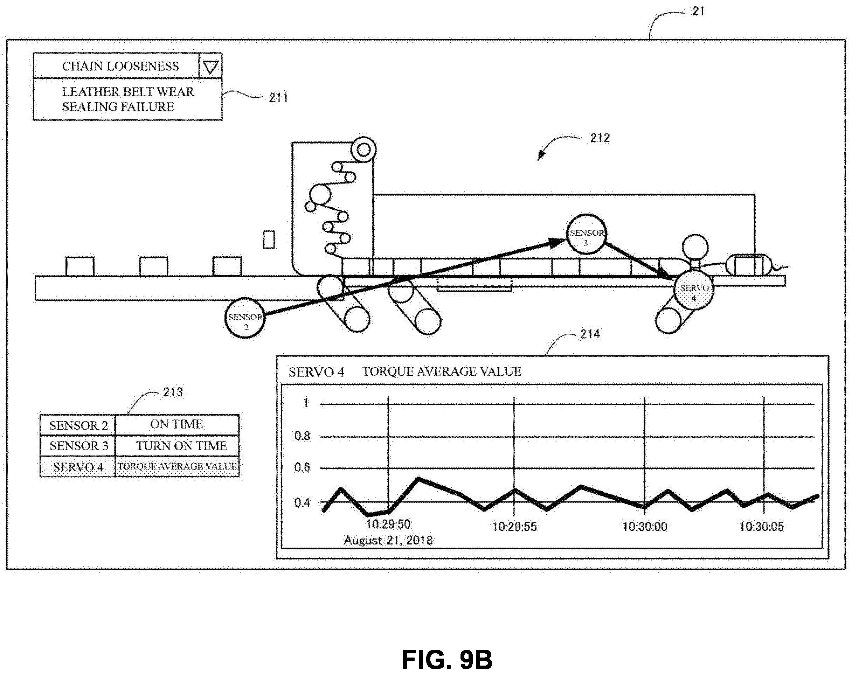

FIG. 9B shows an example in which chain looseness is displayed as an abnormal event in the box 211. As a result, components that may cause chain looseness and feature values thereof are displayed in the list 213. In this example, "SERVO 4 - TORQUE AVERAGE VALUE" is selected, and accordingly the servo 4 in the model diagram 212 is highlighted and a line graph 214 indicating changes over time in "SERVO 4 - TORQUE AVERAGE VALUE" is displayed.

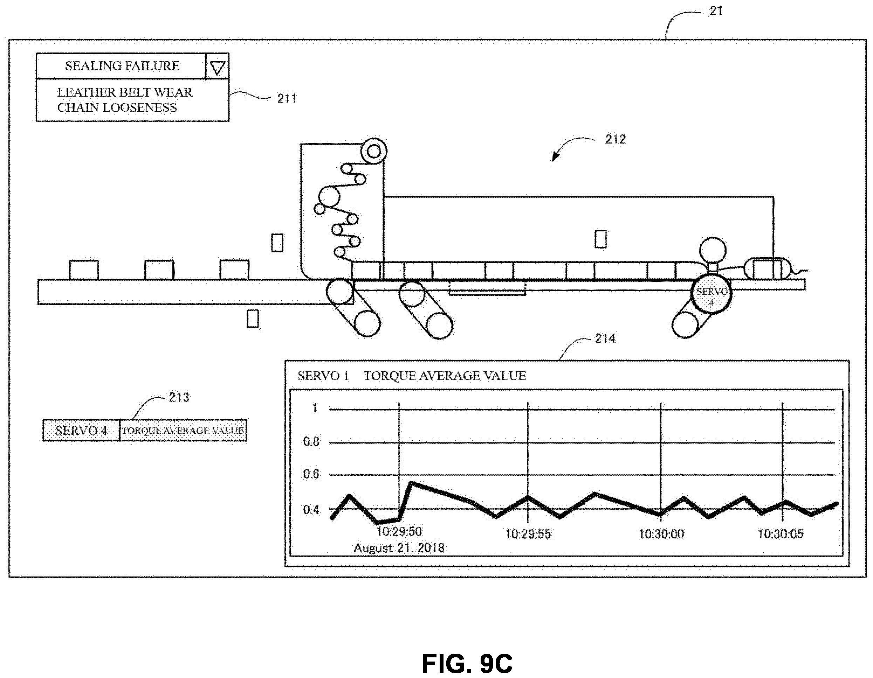

FIG. 9C shows an example in which sealing failure is displayed as an abnormal event in the box 211. As a result, components that may cause sealing failure and feature values thereof are displayed in the list 213. In this example, "SERVO 4 - TORQUE AVERAGE VALUE" is selected, and accordingly the servo 4 in the model diagram 212 is highlighted and a line graph 214 indicating changes over time in "SERVO 4 - TORQUE AVERAGE VALUE" is displayed.

The above-described operations of the screen 21 can be summarized as follows. First, the user selects an anormal event that is to be checked from the selection box 211, using the input device 15. As a result, the display control unit 113 displays the model diagram 212 and the list 213 corresponding to the selected abnormal event, on the screen. Thereafter, when one of the features values is selected from the list 213, the node corresponding thereto is highlighted in the model diagram 212, and the graph 214 indicating changes over time in the selected feature value is displayed. Therefore, the user can visually check the causal relationship regarding the abnormal event while viewing this screen 21. Note that the period corresponding to the changes over time in the feature value to be displayed in the graph 214 can be set by the user as desired.

### <3-3. Display when Abnormality Occurs>

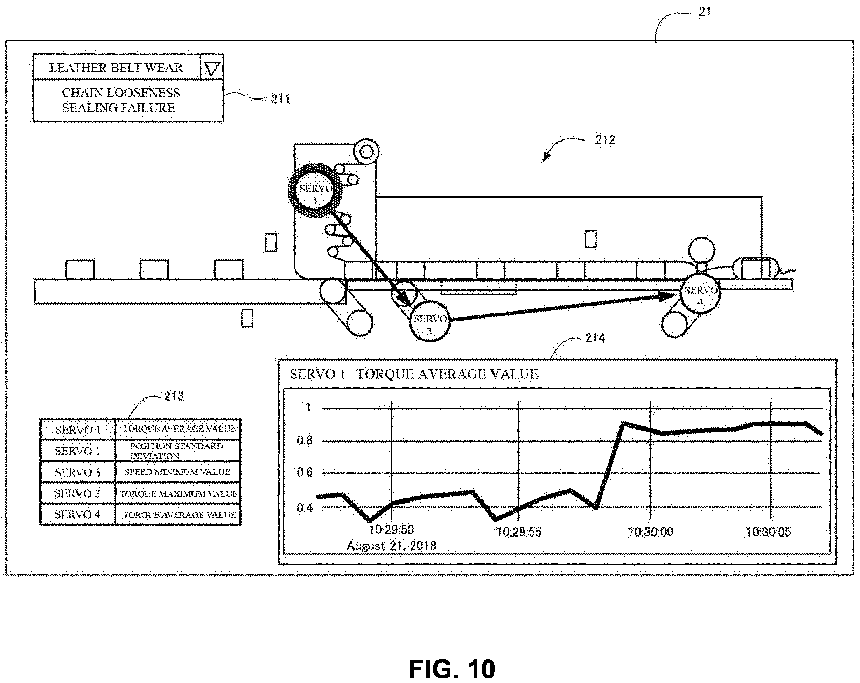

Next, the screen display when an abnormality occurs will be described with reference to FIG. 10. FIG. 10 is a diagram corresponding to FIG. 9A, in which the model diagram 212 is displayed for the case in which the abnormal event is leather belt wear. Here, an abnormality regarding leather belt wear has actually occurred. In this case, the outer edge of the node of the servo 1 in the model diagram 212 is colored and highlighted. This indicates that the abnormality may have been caused by the servo 1. In this example, as indicated by the line graph 214, the torque average value of the servo 1 increases from a certain point in time and exceeds a predetermined value (for example, 0.8). Therefore, the fact that the torque average value of the servo 1 has exceeded the predetermined value can be considered to be the cause of the occurrence of the abnormality. In this way, when an abnormality occurs, the display control unit 113 particularly highlights the node corresponding to the component whose feature value has exceeded the predetermined value.

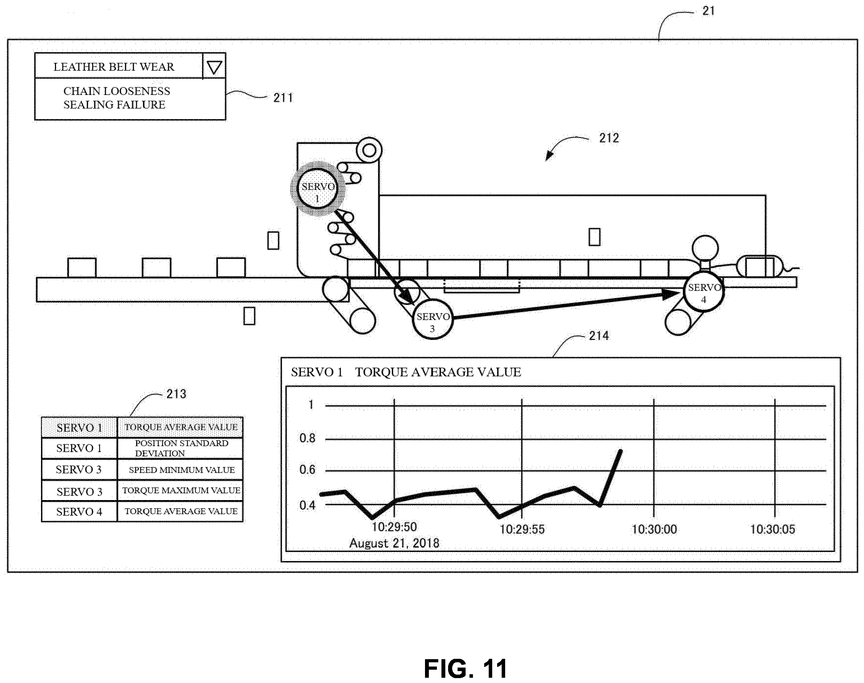

Note that, it is possible not only to highlight the node considered to be the cause when an abnormality has occurred as described above, but also to highlight the node when a sign of an abnormality is detected. A sign of an abnormality means that, although it is possible to continue the driving of the packaging machine, behavior that may cause an abnormality in the future has been exhibited. For example, as shown in FIG. 11, when the average torque value of the servo 1 exceeds a reference value (for example, 0.6), which is a sign indicating that an abnormality may occur, the outer edge of the node of the servo 1 is colored lighter than when an abnormality occurs, so that the user can visually recognize the sign of an abnormality. Thereafter, when an abnormality occurs, the outer edge of the outer edge of the node can be colored as shown in FIG. 10. As a result, the occurrence of an abnormality can be displayed step by step from when a sign of the abnormality is detected. Note that the criterion for judging an abnormality or a sign of an abnormality can be changed as appropriate, and various settings are possible. For example, the criterion may be that the feature value exceeds a predetermined threshold value as described above, or that the time over which the feature value exceeds the threshold value reaches a predetermined time.

### <3-4. Chronological Storage of Causal Relationship Model>

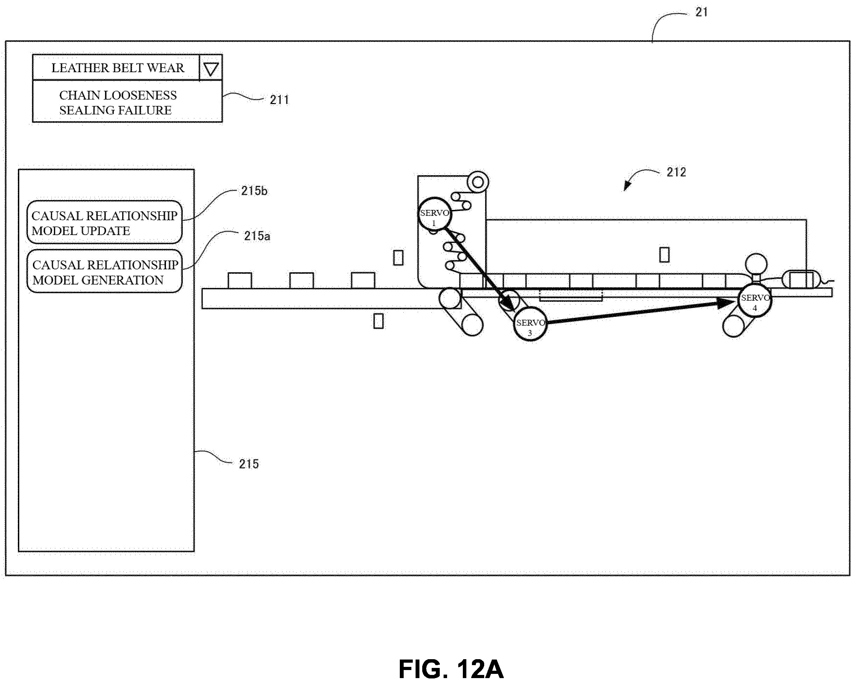

The causal relationship model can be chronologically stored in the storage unit 12 and retroactively displayed. FIGS. 12 A to 12C show a screen 21 different from those shown in FIGS. 9A to 9C. For example, by selecting a tab (not shown), it is possible to transition to the screen 21 shown in FIGS. 12A to 12C. The screen 21 corresponds to an example in which causal relationship models are chronologically stored under predetermined conditions. A list 215 that includes labels 215a to 215d of the causal relationship models stored in chronological order is displayed on the left side of this screen. In this example, causal relationship models are stored under predetermined conditions. A causal relationship model is stored under various conditions, such as when a causal relationship model is newly generated, when a causal relationship model is updated, when an anomality occurs, when the operation of the production facility is started/stopped, when the settings of the production facility or the components thereof are changed, when the feature value of a component, set in advance by the user, reaches a predetermined value, when a time freely set by the user is reached, when the user adds a caption during realtime monitoring, and so on.

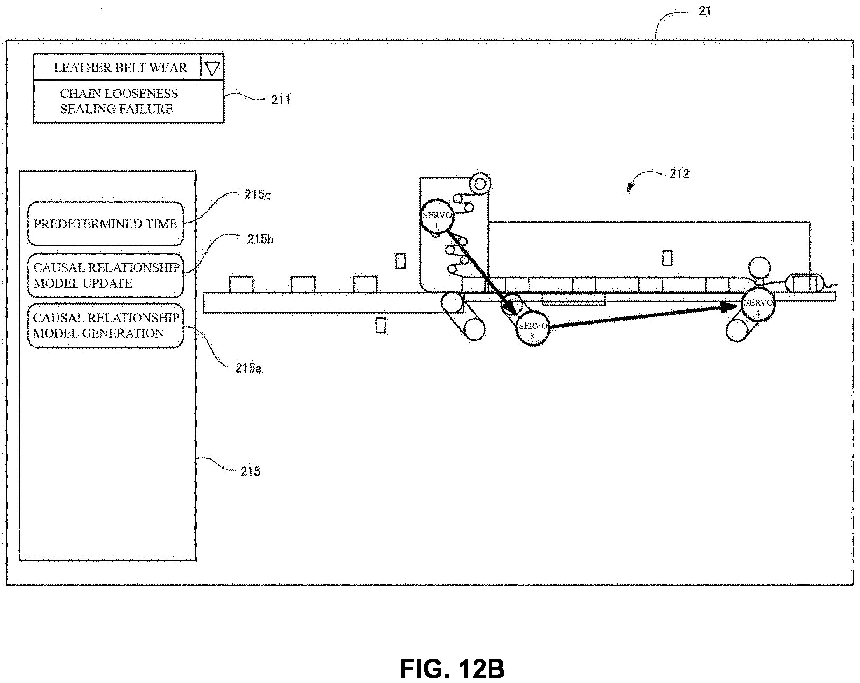

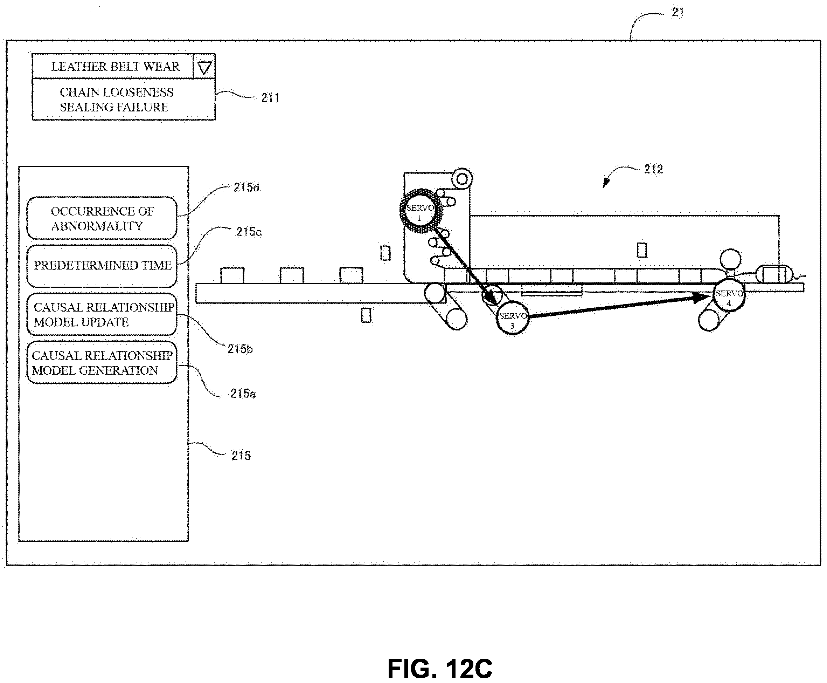

In this list 215, the label indicating the latest causal relationship model is displayed at the top, and a new label is displayed at the top of the list 215 each time a causal relationship model is stored. For example, the example shown in FIG. 12A indicates that the causal relationship model stored when the causal relationship model is updated is the latest causal relationship model. FIG. 12B shows a state in which a predetermined time has elapsed from the state shown in FIG. 12A and the causal relationship model at a predetermined point in time set by the user is stored. A label 215c indicating such a state is displayed at the top of the list 215. FIG. 12C shows a state in which a predetermined time has elapsed from the state shown in FIG. 12B and the causal relationship model when an abnormality has occurred is stored. A label 215d indicating such a state is displayed at the top of the list 215. In the example in FIG. 12C, an abnormality has occurred and therefore the node corresponding to the component related to this abnormality (for example, the servo 1) is highlighted. Note that, in the examples in FIGS. 12A and 12B, no abnormality has occurred and the causal relationship model is unchanged through FIGS. 12A to 12C.

By providing such a list 215, it is possible to retroactively check the causal relationship model. For example, in the example in FIG. 12C, when the user selects one of the labels 215a to 215d from the list 215, the causal relationship model at that time can be displayed as the model diagram 212.

### <4. Features>

(1) According to the present embodiment, a causal relationship model related to an abnormality that may occur in the packaging machine 3 is displayed, and when an abnormality occurs in the packaging machine 3, a node corresponding to the component related to the abnormality is highlighted. Therefore, it is easy for the user to visually check the component related to the abnormality, and to swiftly proceed with taking care of the abnormality. In addition, when a sign of an abnormality is detected, the node corresponding to the component related to the abnormality can be highlighted in a different display mode than when the abnormality occurs. As a result, it is possible to visually check a sign of an abnormality, and proceed with preparations for the occurrence of an abnormality, such as procuring or ordering spare parts.
(2) Changes over time in a feature value of each component are shown in a graph, and therefore the user can visually check changes over time in the feature value of the relevant component when an abnormality occurs. As a result, for example, it is possible to perform an a posteriori check regarding how the feature value has changed to cause the abnormality. Alternatively, by visually checking changes in the feature value, it is possible to detect a sign of the occurrence of an abnormality.
(3) As shown in FIGS. 12A to 12C, causal relationship models are chronologically stored under predetermined conditions and listed. Therefore, it is easy for the user to visually check the causal relationship models retroactively. Therefore, for example, it is possible to perform an a posteriori check regarding changes over time in the feature value, and the components at the time of the occurrence of the abnormality.

### <5. Modifications>

Although an embodiment of the present invention has been described in detail above, the above description is merely an example of the present invention in every respect. It goes without saying that various modifications and variations can be made without departing from the scope of the present invention. For example, the following modifications may be made. Note that, in the following, the same symbols are used for the same components as in the above embodiment, and descriptions of the same features as in the above embodiment are omitted as appropriate. The following modifications can be combined with each other as appropriate.

<5-1>
In the above embodiment, the selection box 211 for an abnormal event, the model diagram 212, the list 213, and the graph 214 are displayed on the screen 21. However, the screen 21 does not necessarily have to display these elements as long as at least the model diagram 212 is displayed. For example, depending on the target production facility, there may be only one abnormal event, and the selection box 211 is also unnecessary in such a case. In addition, it is not necessary to display all the elements 211 to 214 on the screen 21, and these elements may be separately displayed on a plurality of screens so that the user can switch between them. In addition, the screens of FIGS. 12A to 12C are different screens from FIGS. 9A to 9C, but the list 215 can also be displayed on FIGS. 9A to 9C, and the screen configuration can be changed as appropriate.

<5-2>
The mode in which the node is displayed when an abnormality occurs or when a sign of an abnormality is detected is not particularly limited. The node need only be displayed in a mode different from the nodes corresponding to the components not related to the abnormality, or a mode different from the nodes corresponding to the components in which no abnormality has occurred. For example, various display modes such as those related to a color, a shape, and an animation may be employed. The display mode may also change over time. For example, by changing the display mode between immediately after the occurrence of an abnormality and after the elapse of a predetermined period therefrom, the user can visually recognize an approximate time lapse from the occurrence of the abnormality. Moreover, not only the node but also the display mode of the edges connected to the node can be changed. That is to say, it is only necessary to change the display mode of at least either the node related to the abnormality or the edges. Furthermore, in addition to changing the display mode of the node and the edges, it is also possible to notify concerned parties of the abnormality by emitting warning sounds or using means such as e-mails.

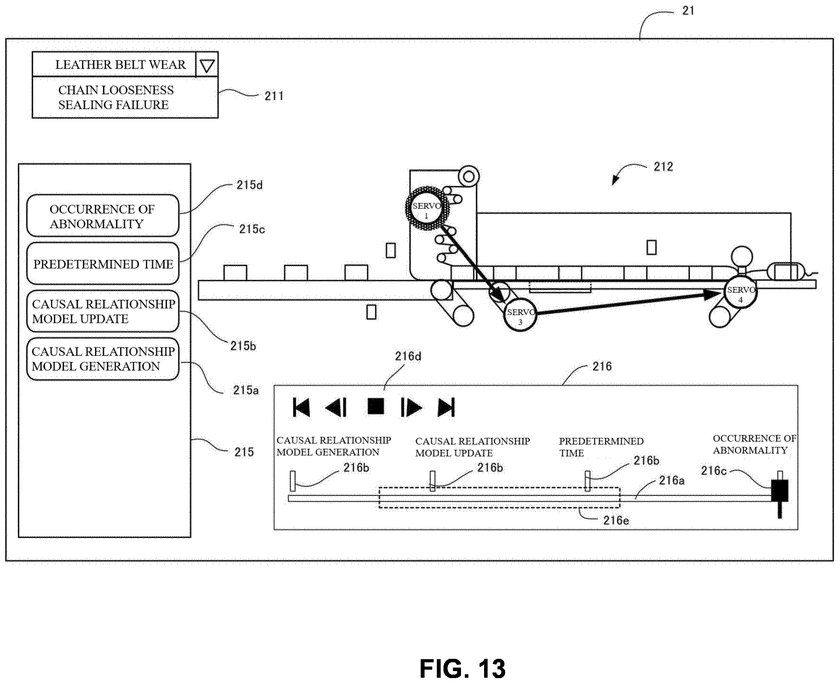

<5-3>
In the case of the screens in FIGS. 12A to 12C, the causal relationship models are chronologically stored and therefore the stored model diagrams 212 can be sequentially displayed. In the example in FIG. 13, a display control box 216 for displaying model diagrams 212 in chronological order is displayed. This display control box 216 displays a timeline 216a, labels 216b each indicating a stored causal relationship model, a time pointer 216c, and display control buttons 216d. For example, when the causal relationship models are to be displayed in chronological order, the time pointer 216c moves to the right on the timeline 216a at a predetermined speed, and when the time pointer 216c reaches the positions where the labels 216b are formed, the model diagrams 212 corresponding thereto are sequentially displayed. Also, it is possible to move the time pointer 216c on the timeline 216a as appropriate, using the display control buttons 216d. That is to say, the time pointer 216c can be moved to the oldest/newest time, advanced/returned by a predetermined period, or stopped. Also, by selecting a predetermined period on the timeline 216a (for example, the range indicated by the reference numeral 216e), the time pointer 216c can be repeatedly moved within the period. As a result, it is possible to visually check changes in the causal relationship model during this period. In this example, the model diagram is displayed in chronological order. However, the mode in which the display control box is displayed is not particularly limited.

<5-4>
The method of building a causal relationship model described in the above embodiment is an example, and other methods may be used. In addition, pieces of schematic diagram data 122 or pieces of causal relationship model data 123 that have been built using another device may be sequentially stored in the storage unit 12.

<5-5>
The present invention is also applicable to production facilities other than the packaging machine 3. In such a case, the components used to build causal relationship models may also be selected as appropriate depending on the production facility. Schematic diagram data related to a plurality of production facilities may be stored in the storage unit 12 and displayed on the display device 2 for each production facility. However, the schematic diagrams of production facilities are not essential, and it is also possible to display only the causal relationship models.

<5-6>
A display system according to the present invention can be constituted by the analysis device 1 and the display device 2 in the above-described production system. Therefore, the display device 2 in the above-described embodiment corresponds to the display unit according to the present invention, and the control unit 11 and the storage unit 12 of the analysis device 1 correspond to the control unit and the storage unit according to the present invention. For example, the control unit, the storage unit, and the display unit according to the present invention may be realized using a tablet PC or the like.

### INDEX TO THE REFERENCE NUMERALS

- 1: Analysis Device
- 11: Control Unit
- 12: Storage Unit
- 2: Display Device (Display Unit)
- 3: Packaging Machine (Production Facility)

## Claims

1. A display system to be provided in a production facility that produces products and includes, as components, at least one driving means for driving the production facility and at least one monitoring means for monitoring the production, the components having a feature value that is controllable, the display system comprising:
a control unit;
a display unit; and
a storage unit,
wherein the storage unit is configured to store a relationship between two or more components of the plurality of components as a causal relationship model regarding an abnormality that may occur in the production facility, and
the control unit is configured to:
display, on the display unit, a model diagram that has nodes corresponding to the components and one or more edges connecting the nodes to each other, based on the causal relationship model; and
when an abnormality occurs in the production facility, change a display mode of at least either a node corresponding to the component related to the abnormality or an edge connected to the node.

2. The display system according to claim 1,
wherein the control unit is configured to change the display mode when a sign of the abnormality is detected.

3. The display system according to claim 1,
wherein the control unit is configured to:
when the feature value reaches a first reference value, determine that a sign of the abnormality has occurred and change the display mode to a first display mode; and
when the feature value reaches a second reference value, determine that the abnormality has occurred and change the display mode to a second display mode.

4. The display system according to any one of claims 1 to 3,
wherein the storage unit is configured to store changes over time in the feature value(s) of the components included in the causal relationship model, and
the control unit is configured to display the changes over time in the feature value(s), on the display unit.

5. The display system according to any one of claims 1 to 4,
wherein the control unit is configured to:
generate and store causal relationship models in the storage unit chronologically, under a predetermined condition;
display a list of the causal relationship models stored in the storage unit, on the display unit; and
display a causal relationship model selected from the list, on the display unit, in response to a request from a user.

6. A display method for displaying, on a display unit, a causal relationship between components of a production facility related to an abnormality that may occur in the production facility, the production facility producing products and including, as the components, at least one driving means for driving the production facility and at least one monitoring means for monitoring the production, the components having a feature value that is controllable, the display method comprising:
a step of storing a relationship between two or more components of the plurality of components as a causal relationship model regarding an abnormality that may occur in the production facility;
a step of displaying, on the display unit, a model diagram that has nodes corresponding to the components and one or more edges connecting the nodes to each other, based on the causal relationship model; and
a step of, when an abnormality occurs in the production facility, changing a display mode of at least either a node corresponding to the component related to the abnormality or an edge connected to the node.

7. A display program for displaying, on a display unit, a causal relationship between components of a production facility related to an abnormality that may occur in the production facility, the production facility producing products and including, as the components, at least one driving means for driving the production facility and at least one monitoring means for monitoring the production, the components having a feature value that is controllable, the display program enabling a computer to carry out:
a step of storing a relationship between two or more components of the plurality of components as a causal relationship model regarding an abnormality that may occur in the production facility;
a step of displaying, on the display unit, a model diagram that has nodes corresponding to the components and one or more edges connecting the nodes to each other, based on the causal relationship model; and
a step of, when an abnormality occurs in the production facility, changing a display mode of at least either a node corresponding to the component related to the abnormality or an edge connected to the node.
